# DEMANDE DE BREVET EUROPEEN

(11) **EP 4 818 616 A1**
(43) Date de publication de la demande: **07.10.2026**
(21) Numéro de dépôt: 26170356.5
(22) Date de dépôt: 01.04.2026
(51) Int. Cl.: F26B 3/06, F26B 3/20, F26B 23/00

(54) **INSTALLATION DE SÉCHAGE PRÉSENTANT UN SYSTÈME DE RÉCUPÉRATION DE CHALEUR ET DE GÉNÉRATION DE VAPEUR DE SÉCHAGE, ET PROCÉDÉ DE SÉCHAGE METTANT EN OEUVRE UNE TELLE INSTALLATION**

(30) Priorité: 03.04.2025 FR 2503510
(71) Demandeur: France EVAPORATION, 59139 Noyelles les Seclin (FR)
(72) Inventeur: DEHAY, Olivier, 59139 NOYELLES-LES-SECLIN (FR); NICOT, Alexandre, 59139 NOYELLES-LES-SECLIN (FR); DEHAY, Sébastien, 59139 NOYELLES-LES-SECLIN (FR)
(74) Mandataire: Plasseraud IP

(57) **Abrégé**

La présente divulgation est relative à une installation de séchage (1) comprenant :
-/A/ un sécheur (2) présentant une enceinte de séchage et une entrée de vapeur de séchage (E2),
- /B/ un système (3) de récupération de chaleur et de génération de vapeur de séchage comprenant un système de compression mécanique de vapeur (32), comportant un ou plusieurs étages de compression mécanique présentant chacun un compresseur (Cop) assurant une compression d'une vapeur basse pression en une vapeur haute pression qui est acheminée jusqu'à ladite entrée (E2) de vapeur de séchage de ladite enceinte de séchage du sécheur (2).

## Description

La présente divulgation est une installation de séchage présentant un système de récupération de chaleur et de génération de vapeur de séchage, ainsi qu'un procédé de séchage mettant en œuvre une telle installation.

### Domaine technique

La présente divulgation relève du domaine des installations de séchage, typiquement industrielles, pour sécher des produits, alimentaires ou non, les produits pouvant être à l'état liquide, pâteux, pulvérulent, ou solide.

### Technique antérieure

L'état de la technique des installations de séchage connait par exemple les technologies de sécheur suivantes notamment, sécheur silo, sécheur tunnel, sécheur à tambour rotatif, sécheur à lit fluidisé, sécheur flash, sécheur, étuve ou/et four, sécheur bande, tour d'atomisation...

Ces différentes technologies sont énergivores et reposent sur la génération de vapeur, portée à une température au-delà de l'ambiante, et déterminée typiquement en fonction de la température limite acceptée par les produits. Bien souvent cette vapeur en température est obtenue à partir d'un apport calorifique obtenu par la combustion d'un combustible, par exemple un gaz, un pétrole, voire un combustible grossier, ce qui engendre une production importante de CO₂, gaz à effet de serre.

Dans le cadre des objectifs environnementaux de réduction des émissions de gaz à effet de serre, un apport calorifique à partir d'une énergie électrique est préféré, en particulier lorsque cette énergie est obtenue à faible cout de production de CO₂, par exemple à partir d'énergies renouvelables, voire d'une énergie nucléaire.

D'une manière générale, il existe un besoin pour des installations de séchage, typiquement industrielles, fonctionnant à partir d'une énergie électrique, de rendement optimisé, réduisant la consommation électrique par rapport aux installations de séchage connues.

### Résumé

La présente divulgation vient améliorer la situation.

Il est proposé une installation de séchage comprenant :
- /A/ un sécheur présentant une enceinte de séchage et une entrée de vapeur de séchage, ladite vapeur de séchage configurée pour échanger thermiquement indirectement avec des produits à sécher dans ladite enceinte de séchage par l'intermédiaire d'une paroi selon une première possibilité, ou encore ladite vapeur de séchage transmettant ses calories à un air de séchage alimentant ladite enceinte de séchage afin de les sécher par contact direct entre les produits et l'air de séchage selon une seconde possibilité, et une sortie de vapeur fatale pour un flux de vapeur fatale provenant du séchage des produits, la vapeur fatale exprimée par les produits,
- /B/ un système de récupération de chaleur et de génération de vapeur de séchage, comportant :
   -- une conduite récupérant le flux de vapeur fatale,
   -- un ensemble de récupération de chaleur alimenté par le flux de vapeur fatale acheminé par la conduite comportant une entrée pour le flux de vapeur fatale acheminé par la conduite et une sortie de condensat pour un condensat et une sortie pour des non condensables,
   -- un système de génération de vapeur comportant une entrée de liquide à vaporiser pour un liquide à vaporiser et assurant la vaporisation dudit liquide qui est évacué par une sortie de vapeur basse pression, la vaporisation dudit liquide étant en tout ou partie obtenue par les calories récupérées dans le flux de vapeur fatale par ledit ensemble de récupération de chaleur,
   -- un système de compression mécanique de vapeur, comportant un ou plusieurs étages de compression mécanique présentant chacun un compresseur assurant une compression de la vapeur basse pression en une vapeur haute pression qui est acheminée jusqu'à ladite entrée de vapeur de séchage de ladite enceinte de séchage du sécheur.

Les caractéristiques exposées dans les paragraphes suivants peuvent, optionnellement, être mises en œuvre, indépendamment les unes des autres ou en combinaison les unes avec les autres :

Selon un mode de réalisation, le liquide à vaporiser provient en tout ou partie d'un condensat provenant de la condensation de la vapeur de séchage ayant transmis ses calories aux produits par l'intermédiaire de la paroi selon la première possibilité, ou encore le liquide à vaporiser provient en tout ou partie d'un condensat provenant de la condensation de la vapeur de séchage ayant transmis ses calories à l'air de séchage selon la seconde possibilité, une conduite assurant le cheminement du condensat jusqu'au système de génération de vapeur.

Selon un mode de réalisation, les étages de compression assurent un ratio de compression supérieur à 10 ; voire 20 par exemple entre 10 et 50.

Selon un mode de réalisation, ladite installation comprenant une unité de contrôle et de régulation du système de compression comprenant un microprocesseur, une mémoire et un jeu d'instruction configurés pour contrôler en fréquence et/ou vitesse tout ou partie des compresseurs, pour assurer plusieurs plages de fonctionnement distinctes du sécheur, et pour contrôler au moins une vanne de régulation d'au moins une boucle de by-pass assurant une recirculation de la vapeur de séchage du ou des compresseurs en amont en assurant un débit minimum dans le ou les compresseurs.

Selon un mode de réalisation, le condensat provenant de la condensation de la vapeur fatale est un liquide qui est distinct du liquide à vaporiser, ledit ensemble de récupération de chaleur et le système de génération de vapeur sont formés par un échangeur à flot tombant comportant dans une enceinte étanche :
- un ensemble de tubes verticaux présentant des ouvertures supérieures, et des ouvertures inférieures, les tubes verticaux s'étendant en parallèle dans un compartiment étanche de ladite enceinte étanche,
- une entrée pour le flux de vapeur fatale dans ledit compartiment étanche, configurée de sorte que le flux de vapeur fatale échange avec des surfaces extérieures des tubes verticaux,
- le liquide à vaporiser provenant d'une source d'alimentation et/ou de la condensation de la vapeur de séchage, et étant alimenté dans une chambre amont, supérieure, débouchant aux ouvertures supérieures des tubes, de sorte que le liquide s'écoule sous l'action de la gravité à l'intérieur des tubes, en se vaporisant en une partie, sous le transfert des calories transmises par la vapeur fatale, une autre partie du liquide non vaporisé ressortant des ouvertures inférieures des tubes et étant récupéré dans une chambre aval, inférieure ;
- une pompe de recirculation assurant la recirculation du liquide récupéré dans la chambre aval, étant recyclé dans la chambre amont ,
- une sortie pour la vapeur basse pression générée à l'intérieur des tubes.

Selon un mode de réalisation, ledit ensemble de récupération de chaleur comprend un condenseur par mélange comportant une chambre de condensation à l'intérieur de laquelle le flux de vapeur fatale se condense en le condensat, par échange direct avec le condensat, qui est récupéré en partie basse par une sortie du condenseur par mélange, refroidi à l'extérieur du condenseur ; et recyclé pour être projeté ou pulvérisé en partie haute de la chambre de condensation via une entrée dans la chambre de condensation.

Selon un mode de réalisation, le condensat est un liquide qui est distinct du liquide à vaporiser, le liquide à vaporiser et le condensat de vapeur fatale n'étant pas mélangés, ledit ensemble de récupération de chaleur comportant un dispositif de transfert de chaleur, comprenant au moins un échangeur thermique et/ou un système de pompe à chaleur, configuré pour prélever des calories sur le condensat, et le refroidir, avant la recirculation du condensat refroidi au condenseur, et transférer les calories prélevées du condensat audit liquide à vaporiser afin de le réchauffer.

Selon un mode de réalisation, le système de génération de vapeur comprend un dispositif de vaporisation configuré pour pulvériser et vaporiser partiellement, en ladite vapeur basse pression, le liquide à vaporiser réchauffé par les calories prélevées du condensat dans une enceinte de vaporisation via une entrée dans ladite enceinte de vaporisation, par brusque chute de pression du liquide, une partie du liquide à vaporiser étant récupérée en partie basse de l'enceinte de vaporisation par une sortie.

Selon un mode de réalisation, le dispositif de transfert de chaleur comporte ledit échangeur thermique comprenant :
- un primaire traversé par le condensat de vapeur fatale en recirculation depuis la sortie du condenseur par mélange jusqu'à l'entrée du condenseur par mélange,
- un secondaire traversé par le liquide à vaporiser recirculé depuis la sortie en partie basse de l'enceinte de vaporisation jusqu'à l'entrée de ladite enceinte de vaporisation et dans lequel le transfert de calories s'opère par l'intermédiaire d'une paroi dudit échangeur thermique.

Selon un mode de réalisation, ledit dispositif de transfert de chaleur comporte un échangeur et une pompe à chaleur,
ledit échangeur comprenant :
- un primaire traversé par le condensat en recirculation depuis la sortie du condenseur par mélange jusqu'à l'entrée du condenseur par mélange,
- un secondaire traversé par une boucle de fluide de transfert recirculé,
   et dans lequel le transfert de calories s'opère par l'intermédiaire d'une paroi dudit échangeur thermique
- ladite pompe à chaleur comprenant un circuit de fluide comportant un évaporateur et un condenseur, le condenseur prélevant de la chaleur du fluide de transfert recirculé, et le condenseur transférant des calories au liquide à vaporiser recirculé depuis la sortie en partie basse de l'enceinte de vaporisation jusqu'à l'entrée de ladite enceinte de vaporisation.

Selon un mode de réalisation, ledit dispositif de transfert de chaleur comprend une pompe à chaleur comprenant un circuit de fluide caloporteur comportant :
- un évaporateur prélevant de la chaleur du condensat recirculé depuis la sortie du condenseur par mélange jusqu'à l'entrée du condenseur par mélange, et
- un condenseur transférant des calories au liquide à vaporiser recirculé depuis la sortie en partie basse de l'enceinte de vaporisation jusqu'à l'entrée de ladite enceinte de vaporisation.

En particulier, le liquide à vaporiser réchauffé par les calories est le condensat récupéré à la sortie basse du condenseur par mélange est pulvérisé et vaporisé partiellement en ladite vapeur basse pression, dans une enceinte de vaporisation via une entrée, par brusque chute de pression, une partie du liquide à vaporiser étant récupérée en partie basse de l'enceinte de vaporisation par une sortie et recyclée jusqu'à ladite entrée du condenseur par mélange.

Selon un mode de réalisation, ledit ensemble de récupération de chaleur présente un échangeur thermique à plaques et une pompe à chaleur et le système de génération de vapeur comprend un dispositif de vaporisation et dans laquelle :
- ledit échangeur thermique à plaques comprend :
   -- un primaire traversé par le flux de vapeur fatale,
   -- un secondaire traversé par un fluide de transfert d'une boucle de fluide de transfert en circulation, ledit échangeur thermique configuré pour assurer un transfert de calories depuis le primaire en prélevant des calories du flux de vapeur fatale jusqu'au secondaire pour réchauffer le fluide de transfert par l'intermédiaire d'une ou plusieurs plaques dudit échangeur

   et dans laquelle ladite pompe à chaleur comprend un circuit de fluide caloporteur comportant un évaporateur prélevant de la chaleur du fluide de transfert de la boucle de circulation et un condenseur transférant des calories au liquide à vaporiser,
   et dans lequel le dispositif de vaporisation comprend une chambre de vaporisation présentant une entrée pour le liquide à vaporiser, réchauffé qui est pulvérisé et vaporisé partiellement dans la chambre de vaporisation par brusque chute de pression du liquide, le liquide à vaporiser, non vaporisé, chutant en partie basse de la chambre étant récupéré par une sortie assurant une recirculation du liquide à vaporiser jusqu'au condenseur de la pompe à chaleur.

Selon un mode de réalisation, le système de génération de vapeur présente un échangeur thermique et un dispositif de vaporisation,
et dans lequel ledit échangeur thermique est un échangeur à faisceau arrosé comporte dans une enceinte étanche:
   - un ensemble de tubes horizontaux présentant des ouvertures latérales à leurs extrémités, les tubes horizontaux s'étendant dans un compartiment étanche de ladite enceinte étanche,
   - une entrée pour le flux de vapeur fatale dans une chambre amont, agencée d'un premier côté du compartiment étanche, débouchant à l'intérieur des tubes, ladite chambre amont configurée de sorte que le flux de vapeur fatale traverse les tubes, en échangeant avec les surfaces intérieures des tubes en se condensant en un condensat et une chambre aval de collecte, débouchant avec l'intérieur des tubes, agencée d'un deuxième côté du comportement étanche, ladite chambre aval configurée pour assurer la collecte du condensat présentant la sortie pour les condensats, et la sortie pour les non condensables,
et dans lequel ledit compartiment dudit échangeur à faisceau arrosé comporte une entrée pour le liquide à vaporiser et un moyen de projection du liquide à vaporiser sur les surfaces extérieures des tubes horizontaux dans le compartiment, configuré pour réchauffer ledit liquide à vaporiser, le compartiment étanche présentant une sortie pour le liquide à vaporiser réchauffé,
et dans lequel le dispositif de vaporisation comprend une chambre de vaporisation présentant une entrée pour le liquide à vaporiser, réchauffé qui est pulvérisé et vaporisé partiellement dans la chambre de vaporisation par brusque chute de pression, le liquide à vaporiser, non vaporisé, chutant en partie basse de la chambre de vaporisation étant récupéré par une sortie assurant une recirculation du liquide à vaporiser jusqu'à l'entrée du compartiment de l'échangeur à faisceau arrosé.

Selon un mode de réalisation, dans laquelle le système de génération de vapeur présente un échangeur thermique qui est un échangeur à faisceau arrosé, une pompe à chaleur, et un dispositif de vaporisation,
et dans lequel ledit échangeur à faisceau arrosé comporte dans une enceinte étanche:
   - un ensemble de tubes horizontaux présentant des ouvertures latérales à leurs extrémités, les tubes horizontaux s'étendant dans un compartiment étanche de ladite enceinte étanche,
   - une entrée pour le flux de vapeur fatale dans une chambre amont, agencée d'un premier côté du compartiment étanche, débouchant à l'intérieur des tubes, la chambre amont configurée de sorte que le flux de vapeur fatale traverse les tubes, en échangeant avec les surfaces intérieurs des tubes en se condensant en un condensat et une chambre aval, débouchant avec l'intérieur des tubes, agencée d'un deuxième côté du comportement étanche, la chambre aval configurée pour assurer la collecte du condensat présentant la sortie pour les condensats, et la sortie pour les non-condensable, et dans lequel ledit compartiment dudit échangeur comporte une entrée pour un liquide de transfert ou fluide de transfert et un moyen de projection d'un liquide sur les surfaces extérieures des tubes horizontaux dans compartiment, configuré pour réchauffer le liquide de transfert, le compartiment étanche présentant une sortie pour le liquide de transfert réchauffé,
et dans laquelle ladite pompe à chaleur comprend un circuit de fluide comportant un évaporateur et un condenseur, ledit évaporateur configuré pour prélever des calories du liquide de transfert qui est ensuite recirculé jusqu'à ladite entrée du compartiment pour le liquide de transfert, ledit condenseur de la pompe à chaleur transférant des calories au liquide à vaporiser ,
et dans lequel le dispositif de vaporisation comprend une chambre de vaporisation présentant une entrée pour le liquide à vaporiser à, réchauffer qui est pulvérisé et vaporisé partiellement dans la chambre de vaporisation par brusque chute de pression du liquide, le liquide à vaporiser, non vaporisé, chutant en partie basse de l'enceinte de vaporisation étant récupéré par une sortie assurant une recirculation du liquide à vaporiser jusqu'au condenseur de la pompe à chaleur.

Selon la première possibilité, ladite entrée pour la vapeur de séchage est configurée pour assurer un séchage indirect des produits par l'intermédiaire de la paroi de ladite enceinte de séchage.

Selon la seconde possibilité dans laquelle ladite entrée pour la vapeur de séchage est configurée pour chauffer, par l'intermédiaire de la paroi, un air, en l'air de séchage qui est alimenté dans ladite enceinte de séchage pour chauffer les produits dans ladite enceinte de séchage, par contact direct entre l'air de séchage et les produits.

Selon un mode de réalisation, le sécheur est choisi parmi :
- une tour d'atomisation pour laquelle ladite enceinte de séchage est pourvue d'un système de pulvérisation d'une suspension à sécher présentant et une entrée d'air de séchage destiné à être mélangé avec les produits à atomiser,
- un sécheur rotatif comprenant un tambour rotatif recevant intérieurement les produits, configuré pour assurer un brassage des produits lors du séchage et une circulation de l'air de séchage à l'intérieur de ladite enceinte contenant les produits,
- un sécheur à bande comprenant une bande de convoyage soutenant les produits assurant un défilement des produits à travers ladite enceinte de séchage,
- un sécheur flash avec une entrée des produits à sécher à la base d'une colonne qui sont dispersés par un flux d'air de séchage qui est ascendant dans la colonne, et emporte les produits,
- un sécheur à lit fluidisé comprenant dans ladite enceinte de séchage une plaque de diffusion traversée par l'air de séchage, assurant la création d'un lit fluidisé pour les produits

Selon un second aspect, la présente divulgation est relative à un procédé de séchage mettant en œuvre une installation de séchage selon la présente divulgation, dans lequel ladite installation de récupération de chaleur et de génération de vapeur comprimée récupère la vapeur fatale qui est à une température comprise entre 10°C et 150°C, et génère la vapeur de chauffage à une température comprise entre 80°C et 220°C

### Brève description des dessins

D'autres caractéristiques, détails et avantages apparaîtront à la lecture de la description détaillée ci-après, et à l'analyse des dessins annexés, sur lesquels :
**Fig. 1**

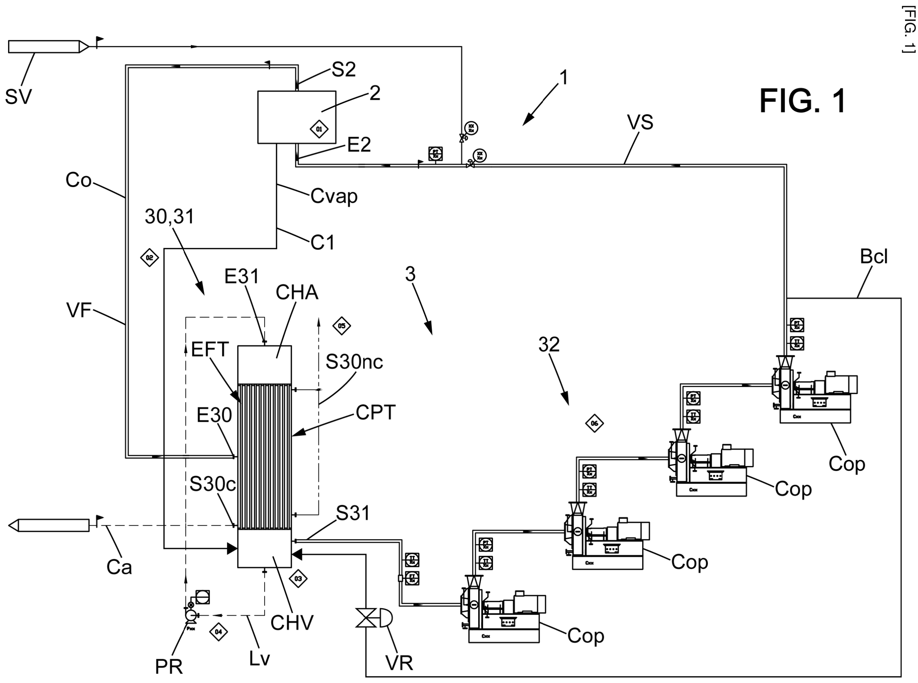

   [Fig. 1] montre une installation selon la présente divulgation comprenant un sécheur présentant une entrée de vapeur de séchage configurée pour échanger thermiquement indirectement avec des produits à sécher dans ladite enceinte de séchage afin de les sécher, et une sortie de vapeur fatale pour un flux de vapeur fatale exprimée par les produits,
   et un système de récupération de chaleur et de génération de vapeur de séchage, comportant :
      - une conduite récupérant le flux de vapeur fatale,
      - un ensemble de récupération de chaleur alimenté par le flux de vapeur fatale acheminée par la conduite
      - un système de génération de vapeur comportant une entrée de liquide à vaporiser pour un liquide à vaporiser et assurant la vaporisation dudit liquide qui est évacué par une sortie de vapeur basse pression la vaporisation dudit liquide étant au moins en partie obtenue par les calories récupérées dans le flux de vapeur fatale par ledit ensemble de récupération de chaleur,
      - un système de compression mécanique de vapeur comportant un ou plusieurs étages de compression mécanique comprenant chacun un compresseur assurant une compression de la vapeur basse pression en une vapeur haute pression qui est acheminée jusqu'à ladite entrée de vapeur de séchage du sécheur,
   et dans laquelle de manière notable, selon un premier mode de réalisation, ledit ensemble de récupération de chaleur et le système de génération de vapeur sont formés par un même échangeur thermique qui est un échangeur à flot-tombant.
**Fig. 2**

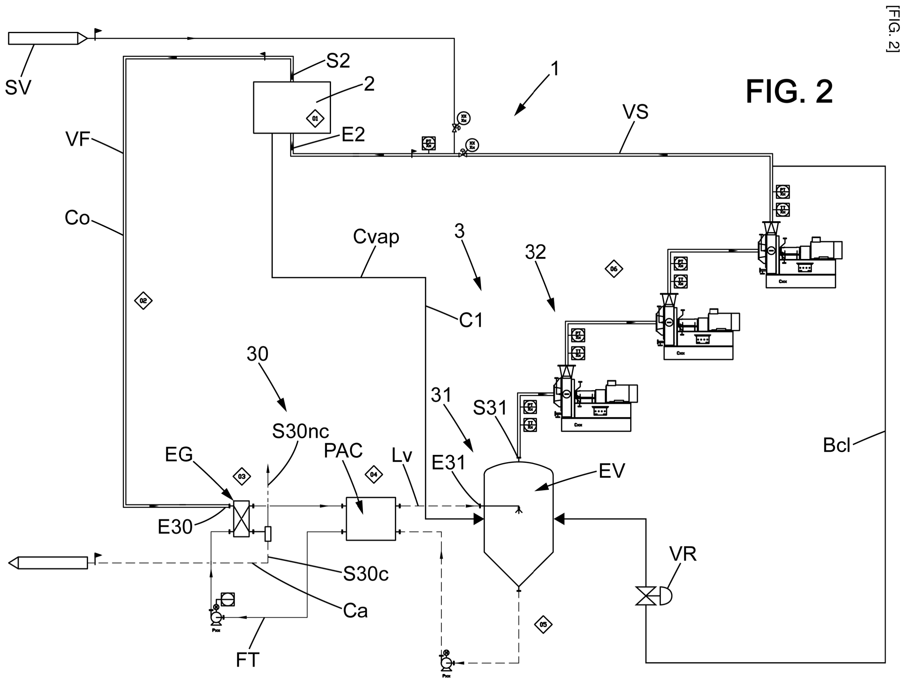

   [Fig. 2] est une installation selon la présente divulgation selon un deuxième mode de réalisation, dans laquelle de manière notable ledit ensemble de récupération de chaleur présente un échangeur thermique à plaques et une pompe à chaleur et le système de génération de vapeur comprend un dispositif de vaporisation du type à vapeur flash.
**Fig. 3**

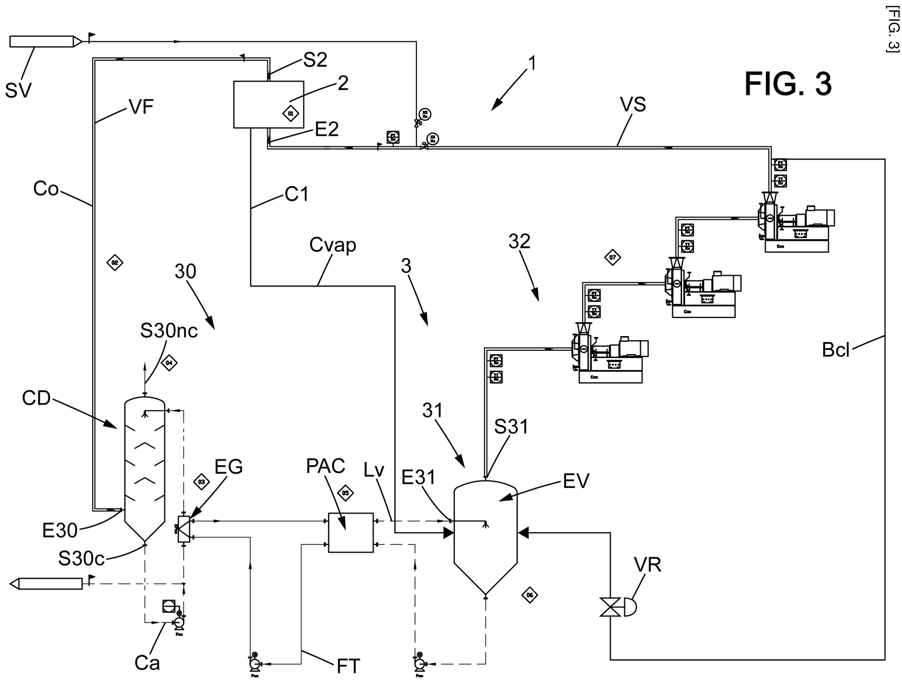

   [Fig. 3] est une installation selon la présente divulgation selon un troisième mode de réalisation, dans laquelle de manière notable ledit ensemble de récupération de chaleur présente un dispositif de condensation, un échangeur thermique à plaques et une pompe à chaleur et le système de génération de vapeur comprend un dispositif de vaporisation du type à vapeur flash.
**Fig. 4**

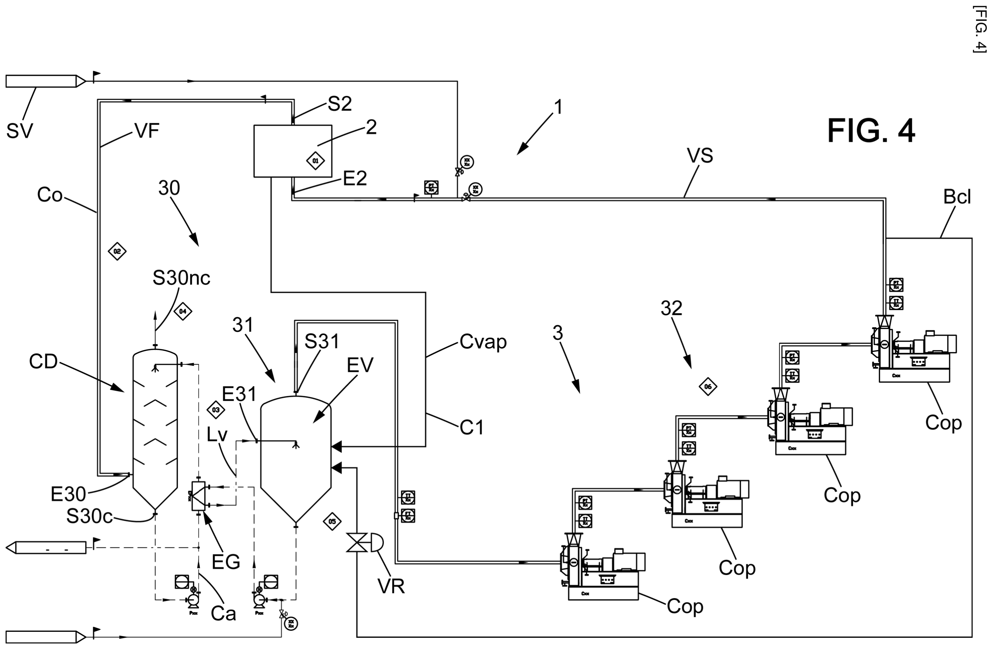

   [Fig. 4] est une installation selon la présente divulgation selon un quatrième mode de réalisation, dans laquelle de manière notable ledit ensemble de récupération de chaleur présente un dispositif de condensation et un échangeur thermique à plaques et le système de génération de vapeur comprend un dispositif de vaporisation du type à vapeur flash.
**Fig. 5**

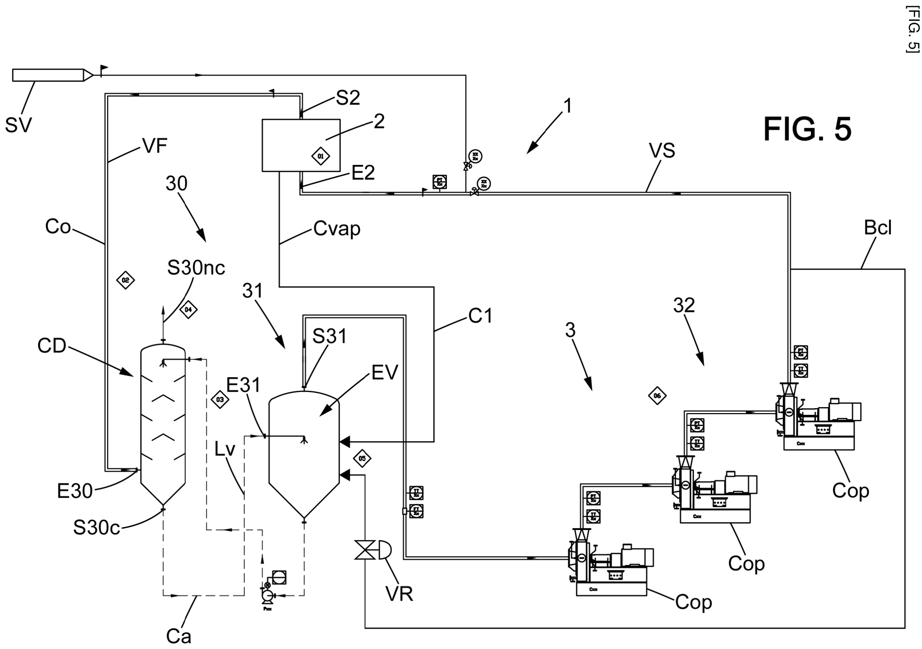

   [Fig. 5] est une installation selon la présente divulgation selon un cinquième mode de réalisation, dans laquelle de manière notable ledit ensemble de récupération de chaleur présente un dispositif de condensation et le système de génération de vapeur comprend un dispositif de vaporisation du type à vapeur flash.
**Fig. 6**

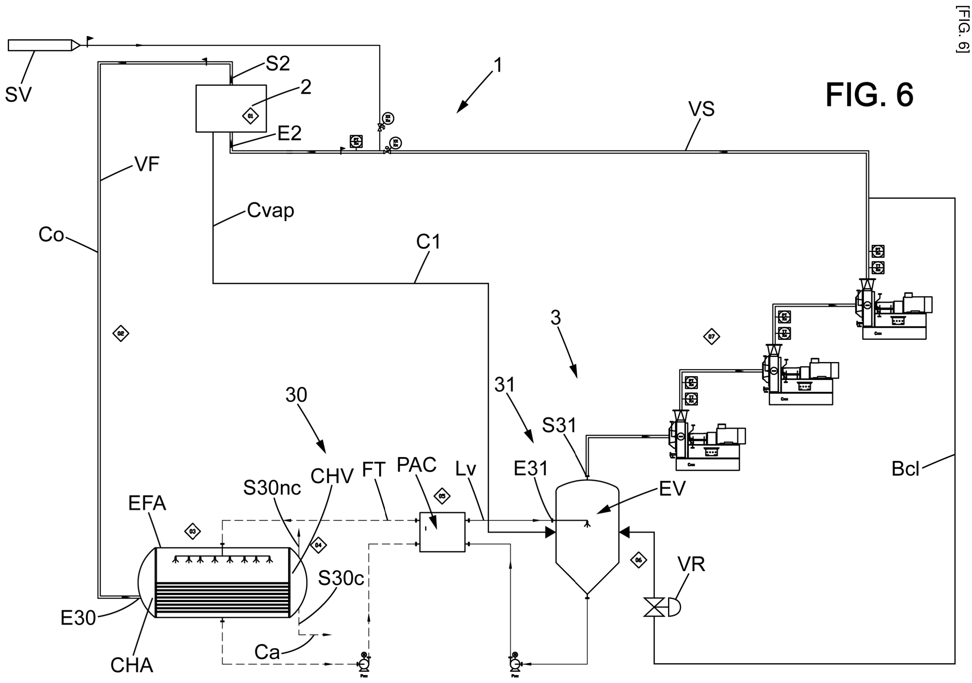

   [Fig. 6] est une installation selon la présente divulgation selon un sixième mode de réalisation, dans laquelle de manière notable ledit ensemble de récupération de chaleur présente un échangeur à faisceau arrosé et une pompe à chaleur et le système de génération de vapeur comprend un dispositif de vaporisation du type à vapeur flash.
**Fig. 7**

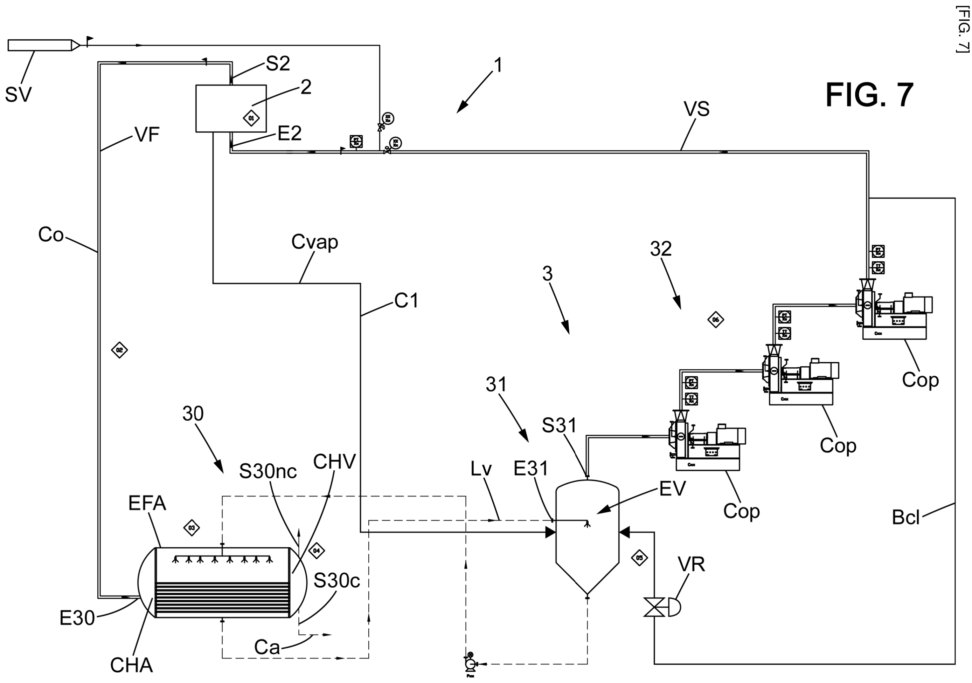

   [Fig. 7] est une installation selon la présente divulgation selon un septième mode de réalisation, dans laquelle de manière notable ledit ensemble de récupération de chaleur présente un échangeur à faisceau arrosé et le système de génération de vapeur comprend un dispositif de vaporisation du type à vapeur flash.
**Fig. 8**

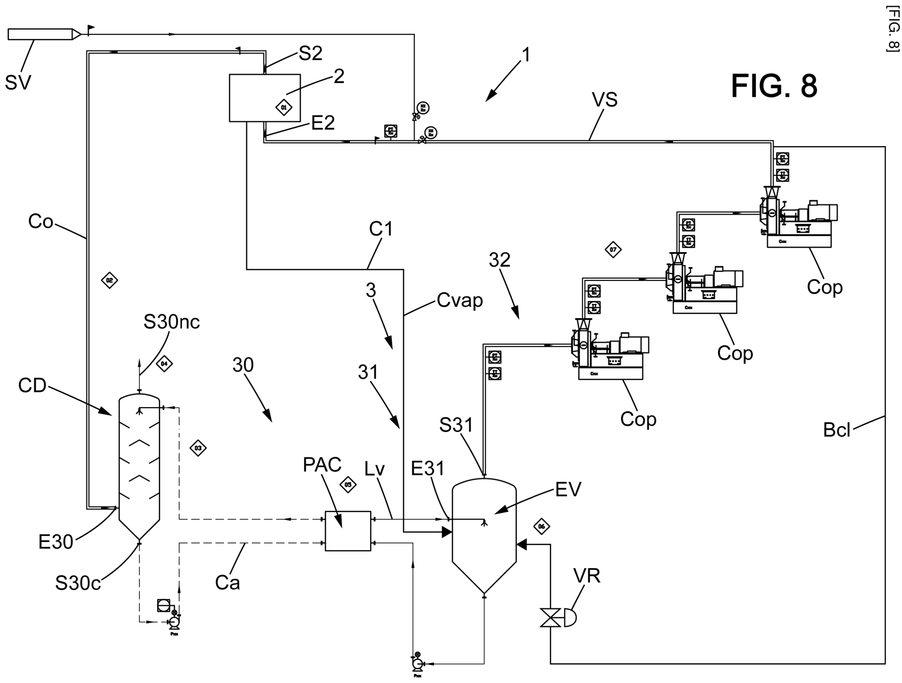

   [Fig. 8] est une installation selon la présente divulgation selon un huitième mode de réalisation, dans laquelle de manière notable ledit ensemble de récupération de chaleur présente un dispositif de condensation et une pompe à chaleur et le système de génération de vapeur comprend un dispositif de vaporisation du type à détente flash.
**Fig. 9**

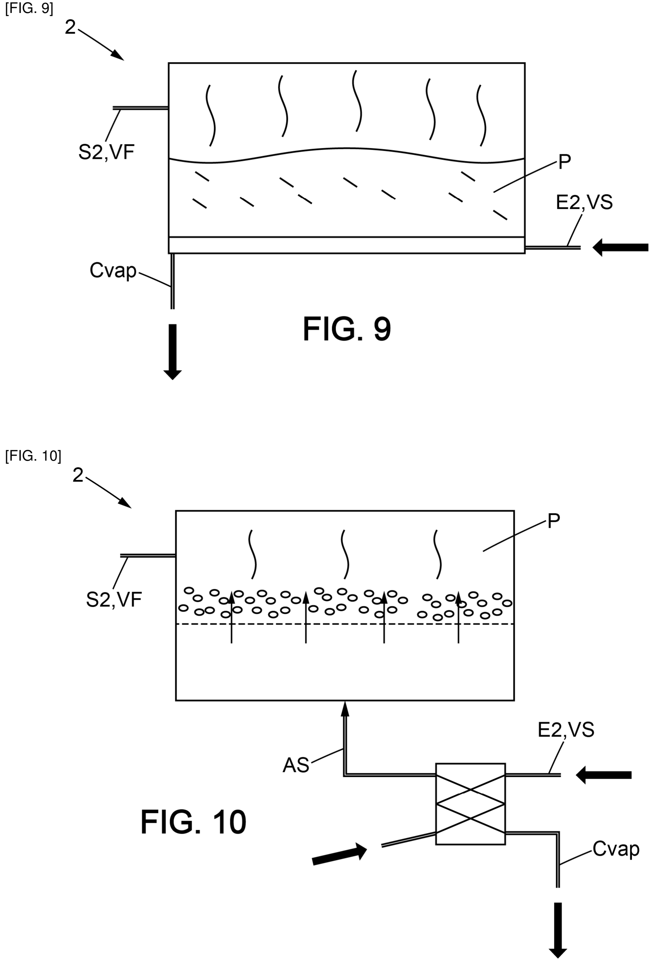

   [Fig. 9] est une vue schématique d'un sécheur 2 selon une première possibilité pour laquelle la vapeur de séchage circule à l'intérieur de la paroi de l'enceinte de séchage contenant les produits à sécher, transférant ses calories au produit par l'intermédiaire de la paroi de l'enceinte, le condensat provenant de la condensation de la vapeur circulant dans une conduite en vue d'acheminer jusqu'au système de génération de vapeur pour être utilisé comme liquide à vaporiser.
**Fig. 10**
   [Fig. 10] est une vue schématique d'un sécheur 2 selon une seconde possibilité pour laquelle la vapeur de séchage jusqu'à un échangeur afin de chauffer un air froid (ambiant) en air de séchage, l'air de séchage alimenté dans ladite enceinte de séchage contenant les produits pour chauffer les produits par contact direct entre l'air de séchage et les produits, le condensat provenant de la condensation de la vapeur de séchage circulant, en aval de l'échangeur dans une conduite en vue d'acheminer jusqu'au système de génération de vapeur pour être utilisé comme liquide à vaporiser.

### Description des modes de réalisation

La présente divulgation Installation de séchage 1 comprenant :
- /A/ un sécheur 2 présentant une enceinte de séchage et comprenant une entrée de vapeur de séchage E2 configurée pour échanger thermiquement indirectement avec des produits à sécher dans ladite enceinte de séchage par l'intermédiaire d'une paroi afin de les sécher selon un première possibilité (notamment illustrée à la figure 9), ou encore ladite entrée de vapeur de séchage, ladite vapeur de séchage VS configurée pour chauffer, par l'intermédiaire d'une paroi, un air en air de séchage AS selon une seconde possibilité (notamment illustrée à la figure 10), et une sortie de vapeur fatale S2 pour un flux de vapeur fatale provenant du séchant des produits P, la vapeur fatale VF exprimée par les produits P
- /B/ un système 3 de récupération de chaleur et de génération de vapeur de séchage qui a pour objet de récupérer les calories contenues dans la vapeur fatale pour la restituer à la vapeur de séchage.

Le système 3 de récupération de chaleur et de génération de vapeur comporte :
-- une conduite Co récupérant le flux de vapeur fatale VF,
-- un ensemble de récupération de chaleur 30 alimenté par le flux de vapeur fatale acheminée par la conduite Co comportant une entrée E30 pour le flux de vapeur fatale acheminée par la conduite et une sortie de condensat S30c pour un condensat Ca et une sortie pour des non condensables s30nc,
-- un système de génération de vapeur 31 comportant une entrée de liquide à vaporiser E31 pour un liquide à vaporiser Lv et assurant la vaporisation dudit liquide qui est évacué par une sortie de vapeur basse pression S31, la vaporisation dudit liquide étant au moins en partie obtenue par les calories récupérées dans le flux de vapeur fatale par ledit ensemble de récupération de chaleur 30,

- un système de compression mécanique de vapeur 32, comportant un ou plusieurs étages de compression mécanique, chacun comportant de préférence un compresseur Cop assurant une compression de la vapeur basse pression en une vapeur haute pression qui est acheminée jusqu'à ladite entrée E2 de vapeur de séchage de ladite enceinte de séchage du sécheur 2.

Le système 3 de récupération de chaleur et de génération de vapeur permet avantageusement de limiter la consommation énergétique pour l'alimentation du sécheur en la vapeur de séchage, et de préférence à partir d'une énergie électrique.

Les équipements du système 3 (notamment pompes de circulation, valves, éventuellement pompes à chaleur, y compris le ou les étages de compression mécaniques) sont des équipements électriques.

Éventuellement, en fonctionnement, la vapeur de séchage générée par le système 3 de récupération peut ne pas être suffisante pour couvrir les besoins du sécheur 2, en régime transitoire, par exemple au démarrage du sécheur, voire même en régime permanent. Une source de vapeur SV, indépendante (à savoir non générée par le système 3) permet d'assurer les besoins en vapeur de séchage du sécheur, lors du démarrage, voire en régime permanent, si un complément est nécessaire.

De manière générale, le liquide à vaporiser Lv provient en tout ou partie d'un condensat Cvap provenant de la condensation de la vapeur de séchage VS ayant transmis ses calories aux produits par l'intermédiaire de la paroi selon la première possibilité, ou encore le liquide à vaporiser provient en tout ou partie d'un condensat Cvap provenant de la condensation de la vapeur de séchage ayant transmis ses calories à l'air de séchage selon la seconde possibilité. Une conduite C1 peut assurer le cheminement du condensat Cvap jusqu'au système de génération de vapeur 31.

De manière générale, les étages de compression peuvent assurer un ratio de compression strictement supérieur à 1 compris, et avantageusement un ratio de compression supérieur à 10 par exemple entre 10 et 50. Le nombre de compresseurs en série peut typiquement être compris entre 3 et 20, et par exemple entre 5 et 10, 18., etc pour permettre un ratio de compression supérieur à 10, voire supérieur à 20. Si la vapeur basse pression générée est à 80°C les étages de compression électriques peuvent permettre de la comprimer jusqu'à 200°C (soit un ratio de compression de 33), et par exemple entre 150°C et 200°C

À titre d'exemple non limitatif, le sécheur 2 peut être notamment choisi parmi :
- une tour d'atomisation pour laquelle ladite enceinte de séchage est pourvue d'un système de pulvérisation d'une suspension à sécher, par contact direct avec de l'air chaud ; la vapeur de séchage vient chauffer un air froid (par exemple à température ambiante) en un air chaud, par l'intermédiaire d'une paroi (échange indirect), l'air chaud étant mélangé au produit à pulvériser, par exemple par l'intermédiaire d'une buse bi-fluide recevant l'air chaud et le produit à pulvériser,
- un sécheur rotatif comprenant un tambour rotatif recevant intérieurement les produits, configuré pour assurer un brassage des produits lors du séchage et une circulation d'air de séchage à l'intérieur du tambour, typiquement à contre-courant des produits séchés
- un sécheur rotatif recevant intérieurement la vapeur de séchage, le produit séché sur la surface extérieure du tambour de sorte que l'échange s'opère par la paroi du tambour
- un sécheur à bande comprenant une bande de convoyage soutenant les produits assurant un défilement des produits à travers ladite enceinte de séchage,
- un sécheur flash avec une entrée des produits à sécher à la base d'une colonne qui sont dispersés par un flux d'air chaud, ascendant dans la colonne, en emportant les produits, l'air de séchage AS, chaud étant obtenu par chauffage d'air, à partir de la vapeur de séchage VS, typiquement par l'intermédiaire d'une paroi (échange indirect)
- un sécheur à lit fluidisé comprenant dans ladite enceinte de séchage une plaque de diffusion traversée par de l'air chaud (air de séchage), les produits en suspension par le flux vertical formant un lit fluidisé, l'air chaud est obtenu par chauffage d'air, à partir de la vapeur de séchage, typiquement par l'intermédiaire d'une paroi (échange indirect)

La vapeur de séchage VS est une vapeur saturée ou sursaturée pour assurer un échange entre les produits et la vapeur de séchage par l'intermédiaire d'une paroi, ou encore pour chauffer un air par l'intermédiaire d'une paroi qui est alimenté dans ladite enceinte de chauffage afin de chauffer directement les produits. L'air de séchage, AS présente un taux d'humidité éloigné de celui de la saturation de la vapeur, et peut donc se charger de l'humidité des produits dans ladite enceinte de séchage avant de s'évacuer par la sortie S2. Lorsque l'air de séchage entre en contact direct avec les produits lors du séchage dans le sécheur 2, l'air de séchage peut se charger de poussières provenant des produits.

À titre d'exemple non limitatif, le sécheur 2 peut être un sécheur à arbre rotatif comprenant un corps cylindrique à l'intérieur duquel tourne un arbre rotor muni de bras, la rotation du rotor assurant le brassage des produits à l'intérieur de l'enceinte de séchage, ainsi que leur avance suivant l'axe du corps cylindrique, depuis une entrée jusqu'à une sortie, l'air de séchage circulant typiquement à contre-courant des produits dans le sécheur.

D'une manière générale, et selon une première possibilité, et tel qu'illustré aux figures1, 2, 3, 4, 6, 7, 8, le condensat est un liquide qui est distinct du liquide à vaporiser, à savoir que le système de génération de vapeur utilise comme une source de liquide tel que de l'eau de réseau et/ou un condensat Cvap provenant de la condensation de la vapeur de séchage VS (qui est propre dépourvu de poussière), et non le condensat Ca provenant de la condensation de la vapeur fatale qui peut être typiquement chargé de poussière.. Le système de génération de vapeur 31 utilise par exemple de préférence, le condensat Cvap provenant de la condensation de la vapeur de séchage, et en complément une source de liquide telle que l'eau de réseau.

D'une manière générale, et selon une deuxième possibilité, et tel qu'illustré à la figure 5, le système de génération de vapeur peut utiliser comme source de liquide le condensat Ca provenant de la condensation de la vapeur fatale, en profitant de l'enthalpie du condensat, encore chaud, supérieure à la température de vaporisation du système de génération de vapeur 31 et/ou le condensat Cvap provenant de la condensation de la vapeur de séchage, et notamment en complément une source de liquide telle que l'eau de réseau.

De manière générale, ladite installation peut comprendre une unité de contrôle et de régulation du système de compression comprenant un microprocesseur, une mémoire et un jeu d'instructions configurés pour contrôler en fréquence et/ou vitesse tout ou partie des compresseurs Cop, pour assurer plusieurs plages de fonctionnement distinctes du sécheur.

Les phases de fonctionnement du sécheur peuvent comprendre la montée en température du sécheur lors de la montée en route, en particulier un régime transitoire, voire encore un régime permanent, voire encore la mise en arrêt du sécheur.

L'unité de contrôle et les instructions peuvent encore permettre de contrôler au moins une vanne de régulation VR d'au moins une boucle de by-pass Bcl assurant une recirculation de la vapeur de séchage du ou des compresseurs en aval, en particulier de manière à assurer un débit minimum dans le ou les compresseurs. Aussi, lorsque le débit de vapeur est trop bas dans tout ou partie des compresseurs, suivant une ou plusieurs phases du sécheur, la vanne de régulation assure une recirculation de la vapeur de séchage afin d'augmenter le débit dans les compresseurs. Bien que la figure illustre une seule boucle de by-pass commandée par une vanne de régulation, il peut y avoir plusieurs boucles de régulation indépendantes, commandées de préférence indépendamment par plusieurs vannes de régulation.

De manière générale, tout ou partie des rotors de compresseurs Cop peut comporter un système anti-retour, protégeant les équipements de compression d'une brusque arrivée de vapeur à contre-courant, les protégeant ainsi d'un endommagement. Le système anti-retour peut être du type une roue à crochets et système de cliquet. Les crochets (ou dents) sont répartis sur la périphérie de la roue. Le cliquet peut typiquement coopérer avec les crochets (ou dents) appliqués en pression par un organe ressort. Les géométries des dents/crochets et du cliquet sont configurées pour que le cliquet glisse sur la périphérie de la roue dans le sens de rotation autorisé, le crochet configuré pour engager avec une des dents de la roue sur la périphérie dans le cas du sens de rotation, opposé pour interdire ce sens retour.

Selon un premier mode de réalisation, illustré à titre d'exemple à la figure 1, ledit ensemble de récupération de chaleur 30 et le système de génération de vapeur 31 sont formés par un échangeur à flot tombant EFT.

Ledit échangeur à flot tombant EFT comporte dans une enceinte étanche :
- un ensemble de tubes verticaux présentant des ouvertures supérieures, et des ouvertures inférieures, les tubes verticaux s'étendant en parallèle dans un compartiment étanche CPT de ladite enceinte étanche,
- une entrée typiquement latérale pour le flux de vapeur fatale dans ledit compartiment étanche CPT, formant typiquement l'entrée E30 configurée de sorte que le flux de vapeur fatale échange avec des surfaces extérieures des tubes verticaux,
- le liquide à vaporiser qui peut provenir d'une source d'alimentation telle que l'eau de réseau et/ou du condensat Cvap, et étant alimenté dans une chambre amont CHA, supérieure, du compartiment étanche débouchant aux ouvertures supérieures des tubes, de sorte que le liquide à vaporiser s'écoule et ruisselle sous l'action de la gravité à l'intérieur des tubes, sur les surfaces intérieures des tubes, en se vaporisant en une partie, sous le transfert des calories transmises par la vapeur fatale, une autre partie du liquide non vaporisé ressortant des ouvertures inférieures des tubes et étant récupérée dans une chambre aval CHV, inférieure.
- une sortie typiquement latérale au compartiment étanche, formant la sortie S31, en particulier la chambre aval ou amont pour la vapeur basse pression générée à l'intérieur des tubes.

Une pompe de recirculation PR assure la recirculation du liquide récupéré dans la chambre aval CHV, étant recyclé dans la chambre amont CHA, typiquement de manière continue.

La vapeur fatale ayant transmis ses calories au liquide Lv par l'intermédiaire des tubes, se condense dans le compartiment étanche CPT qui présente latéralement formant la sortie S30c pour le condensat, ainsi que la sortie pour les non condensables S30nc.

Une telle solution selon le premier mode de réalisation trouve une application particulière lorsque le flux de vapeur fatale en entrée de l'échangeur à flot tombant est peu chargé en poussières, et présente pour avantages :
- a Lorsque dans les buées ou vapeurs fatales S2, contiennent un élément volatile non encrassant autre que l'eau (éthanol par exemple) cela permet ne pas mélanger le condensat Ca et le liquide à vaporiser Lv, ledit élément volatil non encrassant (l'éthanol) étant récupéré en condensat,
- b cette solution présente un bon transfert thermique (meilleur que lorsqu'il y a un échangeur EG) malgré la présence d'air qui est un frein à l'échange.

Une telle solution optimise encore l'emprise au sol : ledit échangeur à flot présentant un seul corps vertical intégrant deux enceintes (échangeur + vaporisateur).

Selon un ou plusieurs modes de réalisations, notamment illustrés selon les exemples des figures 3 , 4, 5, 8, ledit ensemble de récupération de chaleur 30 présente un condenseur par mélange CD comportant une chambre de condensation à l'intérieur de laquelle le flux de vapeur fatale se condense en le condensat Ca, par échange direct avec le condensat, qui est récupéré en partie basse par une sortie du condenseur par mélange CD, refroidi à l'extérieur du condenseur; et recyclé en partie haute de la chambre de condensation via une entrée dans la chambre de condensation, par exemple projeté ou pulvérisé en partie haute de la chambre de condensation. La sortie en partie basse forme la sortie 30c pour le condensat Ca, la chambre de condensation présentant en partie supérieure une sortie formant la sortie pour les non condensables S30nc.

La chambre de condensation présente ladite entrée E30 pour la vapeur fatale, typiquement en partie basse de la chambre de condensation. Le liquide froid, à savoir le condensat recyclé est pulvérisé/projeté en partie haute de la chambre de condensation, et se mélange avec la vapeur fatale pour assurer la condensation de la vapeur, lors de sa chute.

Des ailettes ou des plateaux/déversoirs internes à la chambre de condensation peuvent permettre d'intercepter le liquide froid, chutant par gravité dans la chambre de condensation et de le dévier afin d'assurer une uniformisation du mélange dans le volume de la chambre de condensation.

De manière générale, un tel condenseur par mélange pour condenser la vapeur fatale VF est compatible avec des vapeurs fatales chargées en poussières, en ce qu'il s'agit d'un équipement facilement nettoyable : il peut trouver une application particulière lorsque la vapeur fatale, ayant typiquement échangé directement avec les produits, est chargée en poussières, et en particulier selon les modes de réalisation des figures 3, 4, et 5 pour lesquels les équipements récupérant les calories du condensat sont compatibles avec des condensats chargés en poussières.

Selon un mode de réalisation en particulier selon les figures 3, 4, et 8, le condensat est un liquide qui est distinct du liquide à vaporiser, le liquide à vaporiser Lv et le condensat Ca n'étant pas mélangés, ledit ensemble de récupération de chaleur 30 comportant un dispositif de transfert de chaleur, comprenant au moins un échangeur thermique EG et/ou un système de pompe à chaleur PAC, configuré pour prélever des calories sur le condensat, et le refroidir, avant la recirculation du condensat refroidi au condenseur, et transférer les calories prélevées du condensat audit liquide à vaporiser Lv afin de le réchauffer. Le liquide à vaporiser peut présenter pour source de l'eau de réseau et/ou le condensat Cvap de la vapeur de séchage acheminée par la conduite C1 jusqu'au circuit contenant le liquide à vaporiser.

Selon un mode de réalisation en particulier selon les figures 3, 4, et 8, le système de génération de vapeur 31 comprend ou est formé par un dispositif de vaporisation configuré pour pulvériser et vaporiser partiellement, en ladite vapeur basse pression, le liquide à vaporiser Lv réchauffé par les calories prélevées du condensat Ca dans une enceinte de vaporisation EV via une entrée dans ladite enceinte de vaporisation EV, par brusque chute de pression du liquide, une partie du liquide à vaporiser étant récupérée en partie basse de l'enceinte de vaporisation par une sortie. Le condensat Cvap peut être acheminé par la conduite C1 directement jusqu'en entrée dans ladite enceinte de vaporisation EV.

De manière générale, le liquide récupéré en partie basse du dispositif de vaporisation peut être réchauffé par les calories récupérées par ledit ensemble de récupération de chaleur 30 et réintroduit à l'entrée de la chambre de vaporisation.

Selon un mode de réalisation, notamment illustré à la figure 4, le dispositif de transfert de chaleur comporte ledit échangeur thermique EG comprenant :
- un primaire traversé par le condensat Ca recirculé depuis la sortie du condenseur par mélange CD jusqu'à l'entrée du condenseur par mélange CD,
- un secondaire traversé par le liquide à vaporiser Lv recirculé depuis la sortie en partie basse de l'enceinte de vaporisation EV jusqu'à l'entrée de ladite enceinte de vaporisation
et dans lequel le transfert de calorie s'opère par l'intermédiaire d'une paroi dudit échangeur thermique EG. On peut choisir un échangeur thermique EG, qui peut être traversé par le condensat chargé en poussières, à savoir dont le primaire de l'échangeur traversé par le condensat peut être facilement décrassé.

Selon un mode de réalisation, illustré non limitativement à la figure 3, ledit dispositif de transfert de chaleur comporte un échangeur thermique EG et une pompe à chaleur PAC.

En particulier, et en référence à la figure 3, ledit échangeur comprend :
- un primaire traversé par le condensat Ca recirculé depuis la sortie du condenseur par mélange CD jusqu'à l'entrée du condenseur par mélange CD,
- un secondaire traversé par une boucle de fluide de transfert, FT le fluide de transfert traversant le secondaire de l'échangeur thermique EG par les calories récupérées par les calories prélevées du condensat traversant le primaire ledit échangeur, sous l'action d'une pompe assurant la circulation du fluide dans la boucle.

La pompe à chaleur PAC comprend de manière connue en soi un circuit de fluide pour un fluide caloporteur, le circuit comportant un évaporateur et un condenseur. Un compresseur assure la circulation du fluide caloporteur à l'évaporateur de manière à ce que le fluide caloporteur à l'état liquide s'évapore à l'évaporateur en prélevant des calories du fluide de transfert FT, le fluide à l'état de gazeux étant comprimé dans le compresseur puis se condense au condenseur en transférant des calories au liquide à vaporiser Lv recirculé depuis la sortie en partie basse de l'enceinte de vaporisation jusqu'à l'entrée de ladite enceinte de vaporisation EV. Un tel mode de réalisation illustré à la figure 3 trouve une application particulière lorsque le flux de vapeur fatale est peu chargé en humidité (à savoir que la proportion en air est importante), typiquement à une température inférieure à 80°C, la pompe à chaleur permettant d'augmenter la température du liquide à vaporiser à une température compatible à sa vaporisation par brusque dépression dans ladite enceinte de vaporisation. D'autre part, les calories prélevées par le condensat Ca par la pompe à chaleur le sont seulement par l'intermédiaire de l'échangeur thermique EG de sorte que le condensat n'attaque pas directement la pompe à chaleur PAC, qui est donc protégée des éventuelles poussières contenues dans le condensat.

Selon un autre mode de réalisation, en particulier illustré à la figure 8, ledit dispositif de transfert de chaleur comprend une pompe à chaleur PAC comprenant un circuit de fluide caloporteur comportant :
- un évaporateur prélevant de la chaleur du condensat Ca recirculé depuis la sortie du condenseur par mélange CD jusqu'à l'entrée du condenseur par mélange CD, et
- un condenseur transférant des calories au liquide à vaporiser recirculé depuis la sortie en partie basse de l'enceinte de vaporisation EV jusqu'à l'entrée de ladite enceinte de vaporisation EV.

Un compresseur assure la circulation du fluide caloporteur à l'évaporateur de manière à ce que le fluide caloporteur à l'état liquide s'évapore à l'évaporateur en prélevant des calories du condensat Ca, le fluide à l'état gazeux est compressé par le compresseur, puis se condense au condenseur en transférant des calories au liquide à vaporiser Lv recirculé depuis la sortie en partie basse de l'enceinte de vaporisation jusqu'à l'entrée de ladite enceinte de vaporisation EV. Un tel mode de réalisation illustré à la figure 8 trouve une application particulière lorsque le flux de vapeur fatale est peu chargé en humidité (à savoir que la proportion en air est importante), le flux de vapeur fatale typiquement à une température inférieure à 80°C, la pompe à chaleur PAC permettant d'augmenter la température du liquide à vaporiser à une température compatible à sa vaporisation par brusque dépression dans ladite enceinte de vaporisation.

D'autre part, les calories prélevées par le condensat Ca par la pompe à chaleur le sont directement de sorte que le condensat attaque directement la pompe à chaleur PAC. En revanche, un tel mode de réalisation n'est pas adapté à un flux de vapeur fatale chargé en poussière : en effet contrairement au mode de réalisation de la figure 3, et selon le mode de réalisation de la figure 8, la pompe à chaleur n'est donc pas protégée des éventuelles poussières contenues dans le condensat.

Selon un mode de réalisation, en particulier à la figure 5, le liquide à vaporiser Lv réchauffé par les calories est le condensat Ca récupéré à la sortie basse du condenseur par mélange CD qui est pulvérisé et vaporisé partiellement en ladite vapeur basse pression, dans une enceinte de vaporisation via une entrée, par brusque chute de pression, une partie du liquide à vaporiser étant récupérée en partie basse de l'enceinte de vaporisation par une sortie et recyclée jusqu'à ladite entrée du condenseur par mélange CD, typiquement par une pompe de recirculation. Un tel mode de réalisation trouve une application particulière, même lorsque le flux de vapeur de séchage est chargé en air. Une telle solution dépourvue d'échangeur thermique et/ou de pompe à chaleur est particulièrement avantageuse s'agissant du rendement et de la minimisation de la consommation électrique par rapport aux autres modes de réalisations.

Selon un autre mode de réalisation, illustré à la figure 2, ledit ensemble de récupération de chaleur 30 présente un échangeur thermique EG à plaques et une pompe à chaleur PAC et le système de génération de vapeur comprend un dispositif de vaporisation présentant ladite enceinte de vaporisation EV.

Ledit échangeur thermique EG à plaques comprend :
- un primaire traversé par le flux de vapeur fatale,
- un secondaire traversé par un fluide de transfert FT d'une boucle de fluide en circulation.

Ledit échangeur thermique est configuré pour assurer un transfert de calories depuis le primaire en prélevant des calories du flux de vapeur fatale jusqu'au secondaire pour réchauffer le fluide de transfert FT par l'intermédiaire d'une ou plusieurs plaques dudit échangeur.

La pompe à chaleur PAC comprend un circuit de fluide caloporteur comportant un évaporateur prélevant de la chaleur du fluide de transfert FT de la boucle de fluide et un condenseur transférant des calories au liquide à vaporiser Lv. Un compresseur assure la circulation du fluide caloporteur à l'évaporateur de manière à ce que le fluide caloporteur à l'état liquide s'évapore à l'évaporateur en prélevant des calories du fluide de transfert FT, le fluide à l'état gazeux étant comprimé au compresseur, puis se condensant au condenseur en transférant des calories au liquide à vaporiser Lv recirculé depuis la sortie en partie basse de l'enceinte de vaporisation jusqu'à l'entrée de ladite enceinte de vaporisation EV. Le dispositif de vaporisation comprend une chambre de vaporisation EV présentant une entrée pour le liquide à vaporiser Lv, réchauffé qui est pulvérisé et vaporisé partiellement dans la chambre de vaporisation EV par brusque chute de pression du liquide, le liquide à vaporiser, non vaporisé, chutant en partie basse de la chambre étant récupéré par une sortie assurant une recirculation du liquide à vaporiser jusqu'au condenseur de la pompe à chaleur PAC.

Selon un autre mode de réalisation notamment illustré à la figure 7, le système de génération de vapeur peut présenter un échangeur thermique, et un dispositif de vaporisation.

Ledit échangeur thermique est un échangeur à faisceau arrosé EFA comporte dans une enceinte étanche :
- un ensemble de tubes horizontaux présentant des ouvertures latérales à leurs extrémités, les tubes horizontaux s'étendant dans un compartiment étanche de ladite enceinte étanche,
- une entrée pour le flux de vapeur fatale dans une chambre amont CHA, agencée d'un premier côté du compartiment étanche, débouchant à l'intérieur des tubes, la chambre amont configurée de sorte que le flux de vapeur fatale traverse les tubes, en échangeant avec les surfaces intérieures des tubes et en se condensant en un condensat Ca et une chambre aval CHV de collecte, débouchant avec l'intérieur des tubes, agencée d'un deuxième côté du compartiment étanche, configurée pour assurer la collecte du condensat Ca présentant la sortie S30c pour les condensats, et la sortie S30nc pour les non condensables.

Le compartiment dudit échangeur à faisceau arrosé EFA comporte une entrée pour le liquide à vaporiser sur une partie supérieure du compartiment, et un moyen de projection du liquide à vaporiser sur les surfaces extérieures des tubes horizontaux dans le compartiment, configuré pour réchauffer ledit liquide à vaporiser, le compartiment étanche présentant une sortie pour le liquide à vaporiser, réchauffé par les calories prélevées du flux de vapeur fatale., à sa partie basse.

Le dispositif de vaporisation comprend une chambre de vaporisation EV présentant une entrée pour le liquide à vaporiser Lv réchauffé qui est pulvérisé et vaporisé partiellement dans la chambre de vaporisation EV par brusque chute de pression, le liquide à vaporiser, non vaporisé, chutant en partie basse de la chambre de vaporisation étant récupéré par une sortie assurant une recirculation du liquide à vaporiser jusqu'à l'entrée du compartiment de l'échangeur à faisceau arrosé EFA, typiquement par l'intermédiaire d'une pompe de recirculation. Un tel mode de réalisation, illustré à la figure 7, est compatible avec un flux de vapeur de séchage chargé en poussière, l'intérieur des tubes pouvant être nettoyés facilement, et présente un très bon rendement, mais convient principalement pour une vapeur de séchage peu chargée en air.

Selon un mode de réalisation notamment illustré à la figure 6, le système de génération de vapeur présente un échangeur thermique qui est un échangeur à faisceau arrosé EFA, une pompe à chaleur PAC, et un dispositif de vaporisation.

Ledit échangeur à faisceau arrosé EFA peut comporter dans une enceinte étanche :
- un ensemble de tubes horizontaux présentant des ouvertures latérales à leurs extrémités, les tubes horizontaux s'étendant dans un compartiment étanche de ladite enceinte étanche,
- une entrée pour le flux de vapeur fatale dans une chambre amont CHA, agencée d'un premier côté du compartiment étanche, débouchant à l'intérieur des tubes, la chambre amont configurée de sorte que le flux de vapeur fatale traverse les tubes, en échangeant avec les surfaces intérieures des tubes en se condensant en un condensat Ca et une chambre aval CHV, débouchant avec l'intérieur des tubes, la chambre aval agencée d'un deuxième côté du compartiment étanche, configuré pour assurer la collecte du condensat Ca présentant la sortie pour les condensats S30c, et la sortie pour les non condensables S30nc.

Le compartiment dudit échangeur comporte une entrée pour un liquide de transfert FT et un moyen de projection d'un liquide sur les surfaces extérieures des tubes horizontaux dans le compartiment, configuré pour réchauffer le liquide de transfert FT, le compartiment étanche présentant une sortie pour le liquide de transfert FT réchauffé.

La pompe à chaleur PAC comprend un circuit de fluide caloporteur comportant un évaporateur et un condenseur, ledit évaporateur configuré pour prélever des calories du liquide de transfert FT qui est ensuite recirculé jusqu'à ladite entrée du compartiment pour le liquide de transfert, ledit condenseur de la pompe à chaleur transférant des calories au liquide à vaporiser Lv.

Le dispositif de vaporisation comprend une chambre de vaporisation EV présentant une entrée pour le liquide à vaporiser Lv à réchauffer, qui est pulvérisé et vaporisé partiellement dans la chambre de vaporisation par brusque chute de pression du liquide, le liquide à vaporiser, non vaporisé, chutant en partie basse de l'enceinte de vaporisation étant récupéré par une sortie assurant une recirculation du liquide à vaporiser jusqu'au condenseur de la pompe à chaleur PAC, typiquement par une pompe de circulation. Un tel mode de réalisation illustré à la figure 6, est compatible avec un flux de vapeur de séchage chargé en poussière, l'intérieur des tubes pouvant être nettoyé facilement, et présente un très bon rendement, et de plus convient principalement pour une vapeur de séchage chargée en air grâce au travail de la pompe à chaleur PAC, et à la différence du mode de réalisation de la figure 7.

### Application industrielle

Les présentes solutions techniques peuvent trouver à s'appliquer notamment au domaine du séchage industriel.

La présente divulgation est encore relative à un procédé de séchage mettant en œuvre une installation de séchage selon la présente divulgation, dans lequel ladite installation de récupération de chaleur et de génération de vapeur comprimée récupère la vapeur fatale qui est à une température comprise entre 10°C et 100°C, et génère la vapeur de chauffage à une température comprise entre 80°C et 220°C.

Dans le cas d'un échange direct on utilise généralement de l'air de séchage pour déshydrater les produits. Dans le cas d'un échange indirect, on utilise généralement la vapeur saturée ou sursaturée.

Les produits à sécher peuvent être des produits alimentaires ou non alimentaires tel que des minéraux, pâte à papier, peinture ou autres éléments nécessitant le processus de séchage.

### Liste des signes de référence

- 1: Installation de séchage,
- 2 : Sécheur,
- E2. Entrée de vapeur de séchage,
- S2. Sortie de vapeur fatale,
- 3. Système de récupération de chaleur et de génération de vapeur de séchage,
- 30. Ensemble de récupération de chaleur,
- S30c. Sortie des condensats,
- S30nc ; Sortie des non condensables.
- 31. Système de génération de vapeur,
- E31. Entrée de liquide à vaporiser,
- S31. Sortie de vapeur basse pression,
- 32 système de compression mécanique de vapeur
- CD. Condenseur par mélange (figures 3, 4, 5, et 8)
- EFT. Échangeur à flot tombant (figure 1),
- CPT. Compartiment (recevant les tubes verticaux dudit échangeur à flot tombant)
- EFA. Échangeur à faisceau arrosé (figures 6 et 7),
- EG. Échangeur thermique,
- PAC. Pompe à chaleur (figures 2, 3 et 6),
- FT. Fluide de transfert (boucle entre l'échangeur et la pompe à chaleur à la figure 2, 3 et 6)
- CHA. Chambre amont (Echangeur à flot tombant selon la figure 1 ou échangeur à faisceau arrosé selon les figures 6 et 7)
- CHV. Chambre aval (Echangeur à flot tombant selon la figure 1 ou échangeur à faisceau arrosé selon les figures 6 et 7)
- SV. Source de vapeur.
- Ca. Condensat,
- Lv. Liquide à vaporiser
- VS. Vapeur de séchage,
- VF. Vapeur fatale,
- Co. Conduite vapeur fatale,
- Cvap. Condensat (vapeur de séchage)
- C1. Conduite (condensat Cvap)
- Cop. Compresseurs
- AS. Air de séchage.

## Revendications

1. Installation de séchage (1) comprenant :
- /A/ un sécheur (2) présentant une enceinte de séchage et une entrée de vapeur de séchage (E2), ladite vapeur de séchage (VS) configurée pour échanger thermiquement indirectement avec des produits (P) à sécher dans ladite enceinte de séchage par l'intermédiaire d'une paroi selon une première possibilité, ou encore ladite vapeur de séchage (VS) transmettant ses calories à un air de séchage (AS) alimentant ladite enceinte de séchage afin de les sécher par contact direct entre les produits et l'air de séchage selon une seconde possibilité, et une sortie de vapeur fatale (S2) pour un flux de vapeur fatale (VF) provenant du séchage des produits, la vapeur fatale exprimée par les produits,
- /B/ un système (3) de récupération de chaleur et de génération de vapeur de séchage, comportant :
-- une conduite (Co) récupérant le flux de vapeur fatale,
-- un ensemble de récupération de chaleur (30) alimenté par le flux de vapeur fatale acheminée par la conduite (Co) comportant une entrée (E30) pour le flux de vapeur fatale acheminée par la conduite et une sortie de condensat (S30c) pour un condensat (Ca) et une sortie pour des non condensables (s30nc),
-- un système de génération de vapeur (31) comportant une entrée de liquide à vaporiser (E31) pour un liquide à vaporiser (Lv) et assurant la vaporisation dudit liquide qui est évacué par une sortie de vapeur basse pression (S31), la vaporisation dudit liquide étant en tout ou partie obtenue par les calories récupérées dans le flux de vapeur fatale (VF) par ledit ensemble de récupération de chaleur (30),
-- un système de compression mécanique de vapeur (32), comportant un ou plusieurs étages de compression mécanique présentant chacun un compresseur (Cop) assurant une compression de la vapeur basse pression en une vapeur haute pression qui est acheminée jusqu'à ladite entrée (E2) de vapeur de séchage de ladite enceinte de séchage du sécheur (2).

2. Installation selon la revendication 1, dans laquelle le liquide à vaporiser (Lv) provient en tout ou partie d'un condensat (Cvap) provenant de la condensation de la vapeur de séchage (VS) ayant transmis ses calories aux produits par l'intermédiaire de la paroi selon la première possibilité, ou encore le liquide à vaporiser provient en tout ou partie d'un condensat (Cvap) provenant de la condensation de la vapeur de séchage ayant transmis ses calories à l'air de séchage selon la seconde possibilité, une conduite (C1) assurant le cheminement du condensat (Cvap) jusqu'au système de génération de vapeur (31).

3. Installation selon la revendication 1 ou 2, dans laquelle les étages de compression assurent un ratio de compression supérieur à 10 ; voire 20 par exemple entre 10 et 50.

4. Installation selon une des revendications 1 à 3, comprenant :
- une unité de contrôle et de régulation du système de compression comprenant un microprocesseur, une mémoire et un jeu d'instruction configurés pour contrôler en fréquence et/ou vitesse tout ou partie des compresseurs, pour assurer plusieurs plages de fonctionnement distinctes du sécheur, et pour contrôler au moins une vanne de régulation (VR) d'au moins une boucle de by-pass (Bcl) assurant une recirculation de la vapeur de séchage du ou des compresseurs en amont en assurant un débit minimum dans le ou les compresseurs.

5. Installation selon l'une des revendications 1 à 4, dans laquelle le condensat (Ca) provenant le condensation de la vapeur fatale (VF) est un liquide qui est distinct du liquide à vaporiser, ledit ensemble de récupération de chaleur (30) et le système de génération de vapeur (31) sont formés par un échangeur à flot tombant (EFT) comportant dans une enceinte étanche:
- un ensemble de tubes verticaux présentant des ouvertures supérieures, et des ouvertures inférieures, les tubes verticaux s'étendant en parallèle dans un compartiment étanche (CPT) de ladite enceinte étanche,
- une entrée pour le flux de vapeur fatale (VF) dans ledit compartiment étanche, configurée de sorte que le flux de vapeur fatale échange avec des surfaces extérieures des tubes verticaux,
- le liquide à vaporiser (Lv) provenant d'une source d'alimentation et/ou de la condensation de la vapeur de séchage lorsque ladite installation est selon la revendication 2, et étant alimenté dans une chambre amont (CHA), supérieure, débouchant aux ouvertures supérieures des tubes, de sorte que le liquide s'écoule sous l'action de la gravité à l'intérieur des tubes, en se vaporisant en une partie, sous le transfert des calories transmises par la vapeur fatale, une autre partie du liquide non vaporisé ressortant des ouvertures inférieures des tubes et étant récupéré dans une chambre aval (CHV), inférieure ;
- une pompe de recirculation (PR) assurant la recirculation du liquide récupéré dans la chambre aval (CHV), étant recyclé dans la chambre amont (CHA),
- une sortie (S31) pour la vapeur basse pression générée à l'intérieur des tubes.

6. Installation selon l'une des revendications 1 à 4, dans laquelle ledit ensemble de récupération de chaleur (30) comprend un condenseur par mélange (CD) comportant une chambre de condensation à l'intérieur de laquelle le flux de vapeur fatale (VF) se condense en le condensat (Ca), par échange direct avec le condensat (Ca), qui est récupéré en partie basse par une sortie du condenseur par mélange (CD), refroidi à l'extérieur du condenseur ; et recyclé pour être projeté ou pulvérisé en partie haute de la chambre de condensation via une entrée dans la chambre de condensation.

7. Installation selon la revendication 6 dans laquelle le condensat est un liquide qui est distinct du liquide à vaporiser, le liquide à vaporiser (Lv) et le condensat (Ca) de vapeur fatale n'étant pas mélangés, ledit ensemble de récupération de chaleur (30) comportant un dispositif de transfert de chaleur, comprenant au moins un échangeur thermique (EG) et/ou un système de pompe à chaleur (PAC), configuré pour prélever des calories sur le condensat (Ca), et le refroidir, avant la recirculation du condensat refroidi au condenseur, et transférer les calories prélevées du condensat audit liquide à vaporiser (Lv) afin de le réchauffer.

8. Installation selon la revendication 7, dans laquelle le système de génération de vapeur (31) comprend un dispositif de vaporisation configuré pour pulvériser et vaporiser partiellement, en ladite vapeur basse pression, le liquide à vaporiser (Lv) réchauffé par les calories prélevées du condensat (Ca) dans une enceinte de vaporisation (EV) via une entrée dans ladite enceinte de vaporisation (EV), par brusque chute de pression du liquide, une partie du liquide à vaporiser étant récupérée en partie basse de l'enceinte de vaporisation par une sortie.

9. Installation selon la revendication 8, dans laquelle le dispositif de transfert de chaleur comporte ledit échangeur thermique (EG) comprenant :
- un primaire traversé par le condensat (Ca) de vapeur fatale en recirculation depuis la sortie du condenseur par mélange (CD) jusqu'à l'entrée du condenseur par mélange (CD),
- un secondaire traversé par le liquide à vaporiser (Lv) recirculé depuis la sortie en partie basse de l'enceinte de vaporisation (EV) jusqu'à l'entrée de ladite enceinte de vaporisation et dans lequel le transfert de calories s'opère par l'intermédiaire d'une paroi dudit échangeur thermique (EG).

10. Installation selon la revendication 8 dans laquelle ledit dispositif de transfert de chaleur comporte un échangeur et une pompe à chaleur,
ledit échangeur comprenant :
- un primaire traversé par le condensat en recirculation depuis la sortie du condenseur par mélange (CD) jusqu'à l'entrée du condenseur par mélange (CD),
- un secondaire traversé par une boucle de fluide de transfert recirculé,
et dans lequel le transfert de calories s'opère par l'intermédiaire d'une paroi dudit échangeur thermique (EG).
- ladite pompe à chaleur (PAC) comprenant un circuit de fluide comportant un évaporateur et un condenseur, le condenseur prélevant de la chaleur du fluide de transfert recirculé, et le condenseur transférant des calories au liquide à vaporiser (Lv) recirculé depuis la sortie en partie basse de l'enceinte de vaporisation jusqu'à l'entrée de ladite enceinte de vaporisation (EV).

11. Installation selon la revendication 8 dans laquelle ledit dispositif de transfert de chaleur comprend une pompe à chaleur (PAC) comprenant un circuit de fluide caloporteur comportant :
- un évaporateur prélevant de la chaleur du condensat (Ca) recirculé depuis la sortie du condenseur par mélange (CD) jusqu'à l'entrée du condenseur par mélange (CD), et
- un condenseur transférant des calories au liquide à vaporiser (Lv) recirculé depuis la sortie en partie basse de l'enceinte de vaporisation (EV) jusqu'à l'entrée de ladite enceinte de vaporisation (EV).

12. Installation selon la revendication 6 dans laquelle le liquide à vaporiser (Lv) réchauffé par les calories est le condensat (Ca) récupéré à la sortie basse du condenseur par mélange (CD) est pulvérisé et vaporisé partiellement en ladite vapeur basse pression, dans une enceinte de vaporisation via une entrée, par brusque chute de pression, une partie du liquide à vaporiser étant récupérée en partie basse de l'enceinte de vaporisation par une sortie et recyclée jusqu'à ladite entrée du condenseur par mélange (CD).

13. Installation selon l'une des revendications 1 à 4, ledit ensemble de récupération de chaleur (30) présente un échangeur thermique (EG) à plaques et une pompe à chaleur (PAC) et le système de génération de vapeur comprend un dispositif de vaporisation et dans laquelle :
- ledit échangeur thermique (EG) à plaques comprend :
-- un primaire traversé par le flux de vapeur fatale,
--un secondaire traversé par un fluide de transfert (FT) d'une boucle de fluide de transfert en circulation,
ledit échangeur thermique configuré pour assurer un transfert de calories depuis le primaire en prélevant des calories du flux de vapeur fatale jusqu'au secondaire pour réchauffer le fluide de transfert (FT) par l'intermédiaire d'une ou plusieurs plaques dudit échangeur
et dans laquelle ladite pompe à chaleur (PAC) comprend un circuit de fluide caloporteur comportant un évaporateur prélevant de la chaleur du fluide de transfert (FT) de la boucle de circulation et un condenseur transférant des calories au liquide à vaporiser (Lv) ,
et dans lequel le dispositif de vaporisation comprend une chambre de vaporisation (EV) présentant une entrée pour le liquide à vaporiser (Lv), réchauffé qui est pulvérisé et vaporisé partiellement dans la chambre de vaporisation (EV) par brusque chute de pression du liquide, le liquide à vaporiser, non vaporisé, chutant en partie basse de la chambre étant récupéré par une sortie assurant une recirculation du liquide à vaporiser jusqu'au condenseur de la pompe à chaleur (PAC).

14. Installation selon l'une des revendications 1 à 4, dans laquelle le système de génération de vapeur présente un échangeur thermique et un dispositif de vaporisation,
et dans lequel ledit échangeur thermique est un échangeur à faisceau arrosé (EFA) comporte dans une enceinte étanche:
- un ensemble de tubes horizontaux présentant des ouvertures latérales à leurs extrémités, les tubes horizontaux s'étendant dans un compartiment étanche de ladite enceinte étanche,
- une entrée pour le flux de vapeur fatale dans une chambre amont (CHA), agencée d'un premier côté du compartiment étanche, débouchant à l'intérieur des tubes, ladite chambre amont configurée de sorte que le flux de vapeur fatale traverse les tubes, en échangeant avec les surfaces intérieures des tubes en se condensant en un condensat (Ca) et une chambre aval (CHV) de collecte, débouchant avec l'intérieur des tubes, agencée d'un deuxième côté du comportement étanche, ladite chambre aval configurée pour assurer la collecte du condensat (Ca) présentant la sortie (S30c) pour les condensats, et la sortie (S30nc) pour les non condensables,
et dans lequel ledit compartiment dudit échangeur à faisceau arrosé (EFA) comporte une entrée pour le liquide à vaporiser et un moyen de projection du liquide à vaporiser sur les surfaces extérieures des tubes horizontaux dans le compartiment, configuré pour réchauffer ledit liquide à vaporiser, le compartiment étanche présentant une sortie pour le liquide à vaporiser réchauffé,
et dans lequel le dispositif de vaporisation comprend une chambre de vaporisation (EV) présentant une entrée pour le liquide à vaporiser (Lv), réchauffé qui est pulvérisé et vaporisé partiellement dans la chambre de vaporisation (EV) par brusque chute de pression, le liquide à vaporiser, non vaporisé, chutant en partie basse de la chambre de vaporisation étant récupéré par une sortie assurant une recirculation du liquide à vaporiser jusqu'à l'entrée du compartiment de l'échangeur à faisceau arrosé (EFA).

15. Installation selon l'une des revendications 1 à 4, dans laquelle le système de génération de vapeur présente un échangeur thermique qui est un échangeur à faisceau arrosé (EFA), une pompe à chaleur (PAC), et un dispositif de vaporisation,
et dans lequel ledit échangeur à faisceau arrosé (EFA) comporte dans une enceinte étanche:
- un ensemble de tubes horizontaux présentant des ouvertures latérales à leurs extrémités, les tubes horizontaux s'étendant dans un compartiment étanche de ladite enceinte étanche,
- une entrée pour le flux de vapeur fatale dans une chambre amont (CHA), agencée d'un premier côté du compartiment étanche, débouchant à l'intérieur des tubes, la chambre amont (CHA) configurée de sorte que le flux de vapeur fatale traverse les tubes, en échangeant avec les surfaces intérieurs des tubes en se condensant en un condensat (Ca) et une chambre aval (CHV), débouchant avec l'intérieur des tubes, agencée d'un deuxième côté du comportement étanche, la chambre aval (CHV) configurée pour assurer la collecte du condensat (Ca) présentant la sortie pour les condensats (S30c), et la sortie pour les non-condensable (S30nc),
et dans lequel ledit compartiment dudit échangeur comporte une entrée pour un liquide de transfert ou fluide de transfert(FT) et un moyen de projection d'un liquide sur les surfaces extérieures des tubes horizontaux dans compartiment, configuré pour réchauffer le liquide de transfert (FT), le compartiment étanche présentant une sortie pour le liquide de transfert (FT) réchauffé,
et dans laquelle ladite pompe à chaleur (PAC) comprend un circuit de fluide comportant un évaporateur et un condenseur, ledit évaporateur configuré pour prélever des calories du liquide de transfert (FT) qui est ensuite recirculé jusqu'à ladite entrée du compartiment pour le liquide de transfert, ledit condenseur de la pompe à chaleur transférant des calories au liquide à vaporiser (Lv) , et dans lequel le dispositif de vaporisation comprend une chambre de vaporisation (EV) présentant une entrée pour le liquide à vaporiser (Lv) à, réchauffer qui est pulvérisé et vaporisé partiellement dans la chambre de vaporisation par brusque chute de pression du liquide, le liquide à vaporiser, non vaporisé, chutant en partie basse de l'enceinte de vaporisation étant récupéré par une sortie assurant une recirculation du liquide à vaporiser jusqu'au condenseur de la pompe à chaleur (PAC).

16. Installation de séchage selon l'une des revendications 1 à 15, selon la première possibilité dans laquelle ladite entrée (E2) pour la vapeur de séchage est configurée pour assurer un séchage indirect des produits par l'intermédiaire de la paroi de ladite enceinte de séchage.

17. Installation de séchage selon l'une des revendications 1 à 15, selon la seconde possibilité dans laquelle ladite entrée (E2) pour la vapeur de séchage est configurée pour chauffer, par l'intermédiaire de la paroi, un air, en l'air de séchage (AS) qui est alimenté dans ladite enceinte de séchage pour chauffer les produits dans ladite enceinte de séchage, par contact directe entre l'air de séchage et les produits.

18. Installation selon la revendication 17, dans laquelle le sécheur est choisi parmi :
- une tour d'atomisation pour laquelle ladite enceinte de séchage est pourvue d'un système de pulvérisation d'une suspension à sécher présentant une entrée d'air de séchage destinée à être mélangée avec les produits à atomiser,
- un sécheur rotatif comprenant un tambour rotatif recevant intérieurement les produits, configuré pour assurer un brassage des produits lors du séchage et une circulation de l'air de séchage à l'intérieur de ladite enceinte contenant les produits,
- un sécheur à bande comprenant une bande de convoyage soutenant les produits assurant un défilement des produits à travers ladite enceinte de séchage,
- un sécheur flash avec une entrée des produits à sécher à la base d'une colonne qui sont dispersés par un flux d'air de séchage qui est ascendant dans la colonne, et emporte les produits,
- un sécheur à lit fluidisé comprenant dans ladite enceinte de séchage une plaque de diffusion traversée par l'air de séchage, assurant la création d'un lit fluidisé pour les produits

19. Procédé de séchage mettant en œuvre une installation de séchage selon l'une des revendications 1 à 18, dans lequel ladite installation de récupération de chaleur et de génération de vapeur comprimée récupère la vapeur fatale qui est à une température comprise entre 10°C et 150°C, et génère la vapeur de chauffage à une température comprise entre 80°C et 220°C.
